(19) Europäisches Patentamt
European Patent Office
Office européen des brevets

(11) **EP 3 191 806 B1**

(12) **EUROPÄISCHE PATENTSCHRIFT**

(45) Veröffentlichungstag und Bekanntmachung des Hinweises auf die Patenterteilung:
**07.12.2022  Patentblatt 2022/49**

(21) Anmeldenummer: **15756872.6**

(22) Anmeldetag: **19.08.2015**

(51) Internationale Patentklassifikation (IPC):
**G01F 25/20** (2022.01)      **G01F 23/00** (2022.01)

(52) Gemeinsame Patentklassifikation (CPC):
**G01F 23/0023; G01F 25/20**

(86) Internationale Anmeldenummer:
**PCT/EP2015/069047**

(87) Internationale Veröffentlichungsnummer:
**WO 2016/037815 (17.03.2016 Gazette 2016/11)**

(54) **KALIBRIERUNG EINES SENKLOT-FÜLLSTANDSMESSGERÄTS**

CALIBRATION OF A FILLING LEVEL SENSOR OF THE PLUMB LINE TYPE

CALIBRATION D'UN CAPTEUR DE NIVEAU DE REMPLISSAGE DU TYPE FIL À PLOMB

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2014  DE 102014113081**

(43) Veröffentlichungstag der Anmeldung:
**19.07.2017  Patentblatt 2017/29**

(73) Patentinhaber: **Endress+Hauser SE+Co. KG
79689 Maulburg (DE)**

(72) Erfinder:
• **SANO, Masashi
Ise Kofu, Yamanashi 400-0856 (JP)**
• **KAISER, Andreas
79674 Todtnau (DE)**
• **KAMEI, Yoichi
Yamanashi, Yamanashi 400-0805 (JP)**

(74) Vertreter: **Koslowski, Christine Adelheid
Endress+Hauser Group Services
(Deutschland) AG+Co. KG
Colmarer Straße 6
79576 Weil am Rhein (DE)**

(56) Entgegenhaltungen:
**DE-A1- 19 730 196     DE-A1-102012 102 658
US-A- 4 786 846**

**Beschreibung**

Die Erfindung betrifft ein Verfahren zur Kalibration eines elektromechanischen Füllstandmessgerätes mit zumindest einem Verdrängerelement, das mittels einem Messdraht abwickelbar zumindest mit einer Messtrommel verbunden ist, mit zumindest einer Messwelle, mit der die Messtrommel mechanisch fest verbunden und in zumindest einem Drehlager gelagert ist, mit zumindest einer Gewichtsmessung, die die aktuelle Gewichtskraft des Verdrängerelements und des Messdrahtes ermittelt, und mit zumindest einem Servomotor, der mit der Messwelle gekoppelt ist und der die Messwelle entsprechend einer ermittelten Gewichtsmessung entsprechend nachführt, so dass eine Ermittlung der durch die von einer Änderung des zu messenden Flüssigkeitsniveaus erzeugten Relativbewegung der Messtrommel vorgesehen ist.

Verfahren und Vorrichtungen zur Füllstandmessung, die nach dem Senklotprinzip arbeiten, sind hinlänglich bekannt. Beispielsweise sind in den Dokumenten DE 21 51 094, DE 24 01 486 B2, DE-PS 819 923, DE 39 42 239 A1, US-PS 3,838,518, DE 195 43 352 A1, G 70 31 884.2, G 73 29 766.2, DE 19730196 A1, DE 10 2012 102 658 A1, sowie DE 28 53 360 A1 Füllstandsmesssysteme zur hochgenaue Füllstandsbestimmung beschrieben, die nach dem Senklotprinzip arbeiten. Bei diesen Verfahren zur Füllstandmessung nach dem Senklotprinzip wird ein an einem Messseil hängendes Senklot auf das Füllgut bzw. Schüttgut abgesenkt. Beim Auftreffen auf das Füllgut wird die von der Seiltrommel abgespulte Länge des Messseiles ermittelt und an einer Anzeigevorrichtung die Füllstandshöhe bzw. die Füllmenge angezeigt.

Für unterschiedliche Füllgüter werden zweckmäßigerweise unterschiedliche Senklot eingesetzt. Das Hauptanwendungsgebiet der elektromechanischen Lotung liegt in der Füllstandmessung von sehr hohen Behältern, wo Lösungen mit anderen Messprinzipien sehr kostenintensiv oder aus physikalischen Gründen nicht möglich sind. Mit der elektromechanischen Lotung sind Füllstände in Behältern von derzeit bis zu etwa 70 m Höhe mit einer Genauigkeit von unter einem Millimeter messbar.

Weitere Vorrichtungen zur Flüssigkeitsniveaumessung und Dichtebestimmung die nach dem Verdrängungsmessprinzip arbeiten sind aus der DE 37 21164 A1, DE2853360A1, DE 2401486 B2 und DE 2659416 A1 bekannt geworden.

Aus der DE 37 21164 A1 ist ein Füllstandsmessgerät bekannt, das einen Schwimmer an einem Draht enthält, der auf der Oberfläche einer nicht veranschaulichten Flüssigkeit schwimmt. Der Draht ist auf einer Trommel aufgewickelt und kann auf dieser Trommel mittels der Drehbewegung einer mit der Trommel verbundenen Messwelle aufgespult oder von ihr abgespult werden. Mit dem Boden der Trommel ist eine Messwelle verbunden. Ändert sich das Flüssigkeitsniveau, auf dem der Schwimmer schwimmt, so ändert sich damit auch die vom Draht auf die Trommel ausgeübte Spannung. Diese Änderung der vom Draht ausgeübten Spannung wird über einen als Kupplungsteil wirkenden äußeren Magnetring in ein Drehmoment der Messwelle umgesetzt. Der zylindrische äußere Magnetring ist im Inneren der Trommel mit dem Boden verbunden. Magnetpole Süd- und Nordpole sind in Umfangsrichtung des äußeren Magnetringes abwechselnd angeordnet. An dem mit der Messwelle verbundenen inneren Magnetring sind magnetische Nord- und Südpole in gleicher Anzahl wie am äußeren Magnetring abwechselnd ausgebildet. Ein elektromagnetischer Wandler, z.B. ein Hall-Element ist am äußeren Umfang des inneren Magnetringes im Grenzbereich zwischen unter schiedlichen Magnetpolen angeordnet. Wird bei einer Änderung des zu messenden Flüssigkeitsniveaus eine Kraft erzeugt, die eine Relativbewegung zwischen dem äußeren und inneren Magnetring verursacht, so bewirkt eine Änderung des zwischen dem äußeren und inneren Magnetring vorhandenen magnetischen Flusses im elektromagnetischen Wandler ein elektrisches Signal, durch dass die Messwelle so gedreht wird, dass die Relativbewegung zwischen dem inneren und äußeren Magnetring wieder auf null zurückgeführt und hierbei ein Messwert des erreichten Flüssigkeitsstandes gewonnen wird.

Um die Gewichtsmessung zu kalibrieren werden bei solchen elektromechanischen Füllstandsmeßgeräten in einem Kalibrationsmodus ein bekanntes, frei hängendes Gewicht bzw. ein sich nicht im Medium befindliche Verdrängerelement mit einem definierten Gewicht an den Messdraht gehängt und dessen Gewichtskraft ermittelt. Jedoch kann es hier Aufgrund von Zugkräften durch das Anhängen des Verdrängerelementes oder des Gewichtes an dem Messdraht oder aufgrund von tribolgischen Eigenschaften der Messmechanik zu Messfehlern im Kalibrationsmodus kommen.

Der Erfindung liegt die Aufgabe zugrunde, ein Verfahren zur Kalibration des elektromechanischen Füllstandmessgeräts anzugeben, das die mechanische Messempfindlichkeit und die Messgenauigkeit verbessert, die Messfehlern im Kalibrationsmodus verhindert und einfach umzusetzen ist.

Diese Aufgabe wird gelöst durch ein Verfahren zur Kalibration eines elektromechanischen Füllstandmessgerätes mit zumindest einem Verdrängerelement, das mittels eines Messdrahts abwickelbar zumindest mit einer Messtrommel verbunden ist, mit zumindest einer Messwelle, mit der die Messtrommel mechanisch fest verbunden und in zumindest einem Drehlager gelagert ist, mit zumindest einer in einem Kalibrationsmodus kalibrierte Gewichtsmessung, die die aktuelle Gewichtskraft des Verdrängerelements und des Messdrahtes ermittelt, mit einem Servomotor, der mit der Messwelle gekoppelt ist und der die Messwelle entsprechend der von der Gewichtsmessung ermittelten Gewichtskraft entsprechend nachführt. Das Füllstandsmessgerät ermittelt die von einer Änderung des zu messenden Flüssigkeitsniveaus erzeugten Relativbewegung der Messtrommel.

Erfindungsgemäß werden in dem Kalibrationsmodus Kalibrationswerte ermittelt, indem

- zumindest zwei Gewichte bzw. Verdrängerelemente mit unterschiedlichen, definierten Gewichten bzw. Massen zur Ermittlung deren Gewichtskraft nacheinander jeweils frei hängend an dem Messdraht angehängt werden,
- eine vordefinierte Drehbewegung der Messtrommel durchgeführt wird, und
- als Kalibrationswerte zur Gewichtsmessung die jeweiligen Gewichtskräfte ermittelt werden.

Gemäß einer vorteilhaften Ausgestaltung der Erfindung umfassen die im Kalibrationsmodus nacheinander an den Messdraht angehängten Gewichte bzw. Verdrängerelemente ein Verdrängerelement mit einer definierten ersten Masse.

Gemäß einer Weiterbildung der Erfindung umfassen die im Kalibrationsmodus nacheinander an den Messdraht angehängten Gewichte bzw. Verdrängerelemente ein Gewicht der Masse 0 Gramm, das dadurch erzielt wird, dass der frei hängende Messdraht ohne ein angehängtes Verdrängerelement verwendet wird.

Gemäß einer vorteilhaften Weiterbildung umfassen die im Kalibrationsmodus nacheinander an den Messdraht angehängten Gewichte bzw. Verdrängerelemente ein Verdrängerelement mit einer definierten zweiten Masse, welche von der ersten Masse verschieden ist.

Gemäß einer vorteilhaften Ausgestaltung der Erfindung umfasst die vordefinierte Drehbewegung der Messtrommel beide Drehrichtungen.

Gemäß einer weiteren Ausgestaltung erfolgt die vordefinierte Drehbewegung der Messtrommel mit einer definierten Winkelgeschwindigkeit, einer definierten Winkelbeschleunigung und/oder einer definierten Drehdistanz.

Gemäß einer weiterführenden Ausgestaltung umfasst das Füllstansmessgerät einen Algorithmus, der zumindest im Kalibrationsmodus der Gewichtsmessung des elektromechanischen Füllstandsmessgeräts die Reibungskraft des Drehlagers der Messwelle der Messtrommel kompensiert und aus der aktuellen Ermittlung der Gewichtskraft herausrechnet.

Gemäß einer besonderen Ausgestaltung des Verfahrens wird die Messtrommel mittels der vordefinierten Drehbewegung in zumindest eine oder in beide Drehrichtungen mit einer definierten Winkelgeschwindigkeit, einer definierten Winkelbeschleunigung und/oder einer definierten Drehdistanz gedreht.

Gemäß einer vorteilhaften Weiterbildung des Verfahrens wird ein Algorithmus zumindest im Kalibrationsmodus der Gewichtsmessung des elektromechanischen Füllstandsmessgeräts zur Kompensation der Reibungskraft des Drehlagers der Messwelle der Messtrommel verwendet wird, der die Reibungskraft aus der aktuellen Ermittlung der Gewichtskraft herausrechnet. Gemäß einer Weiterbildung des Verfahrens wird die Reibungskraft des Drehlagers der Messwelle der Messtrommel aus der aktuellen Ermittlung der Gewichtskraft von dem Algorithmus zumindest im Kalibrationsmodus der Gewichtsmessung des elektromechanischen Füllstandsmessgeräts heraus gerechnet wird, indem die Gewichtskraftdifferenz in beide Drehrichtungen der vordefinierten Drehbewegung der Messtrommel ermittelt wird und aus dieser Gewichtskraftsdifferenz die Reibungskraft ermittelt.

Weitere Einzelheiten, Merkmale und Vorteile des Gegenstandes der Erfindung ergeben sich aus der nachfolgenden Beschreibung mit den zugehörigen Zeichnungen, in denen bevorzugte Ausführungsbeispiele der Erfindung dargestellt sind. In den Figuren dargestellte Ausführungsbeispiele der Erfindung sind zur besseren Übersicht und zur Vereinfachung die Elemente, die sich in ihrem Aufbau und/oder in ihrer Funktion entsprechen, mit gleichen Bezugszeichen versehen. Es zeigen:

Fig. 1 ein Ausführungsbeispiel eines Messgeräts zur Ermittlung des Füllstands nach dem Verdrängungsmessprinzip,

Fig. 2 eine Seitenansicht eines Teilausschnitts eines elektromechanischen Füllstandsmessgeräts,

Fig. 3 eine Vorderansicht eines Teilausschnitts des elektromechanischen Füllstandsmessgeräts.

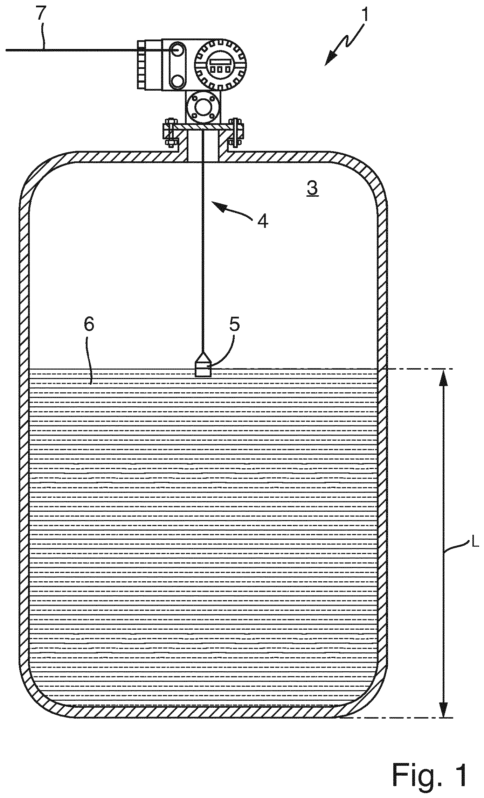

In Fig. 1 ist ein mechanisches Füllstandsmessgerät 1 gezeigt, das beispielsweise von der Anmelderin unter dem Namen PROSERVO NMS 53x - Tankmesssystem vertrieben wird und auf dem Prinzip der Verdrängungsmessung eines Verdrängerelements 5 basiert. Ein kleines Verdrängerelement 5 wird mit Hilfe eines Servomotors an einem Messseil 4 präzise an einer Grenzstelle eines Gleichgewichtsvolumens in der Flüssigkeit 6 im Behälter 2 positioniert. Sobald der Füllstand L der Flüssigkeit 6 im Behälter 2 steigt oder fällt, wird die Position des Verdrängerelements 5 mit dem definierten Gleichgewichtsvolumen vom Servomotor durch drehen der Messwelle 9 mit der Messtrommel 8 nachgeführt. Die Drehung der Messtrommel 8 wird ausgewertet, um den Füllstand L zu ermitteln. Auch die Ermittlung weiterer Messgrößen wie Trennschicht- und Dichtemessung der einzelnen Schichten des Füllguts 6 kann mit diesem Messprinzip durchgeführt werden.

In modernen Industrieanlagen sind Feldgeräte in der Regel über Feldbussysteme 7, wie beispielsweise über Profibus® PA, Foundation Fieldbus® oder HART® mit zumindest einer übergeordneten Steuereinheit, die hier nicht explizit gezeigt ist, verbunden. Die von der Steuereinheit gesteuerte Datenkommunikation auf dem Feldbussystem 7 kann sowohl drahtgebunden als auch drahtlos erfolgen. Normalerweise handelt es sich bei der übergeordneten Steuereinheit um eine SPS bzw. eine PLC (Programmable Logic Controller) oder um eine DCS (Distributed Control System). Die übergeordnete Steuereinheit dient zur Prozesssteuerung, zur Prozessvisualisierung, zur Prozessüberwachung sowie zur Inbetriebnahme und Bedienung der Feldgeräte.

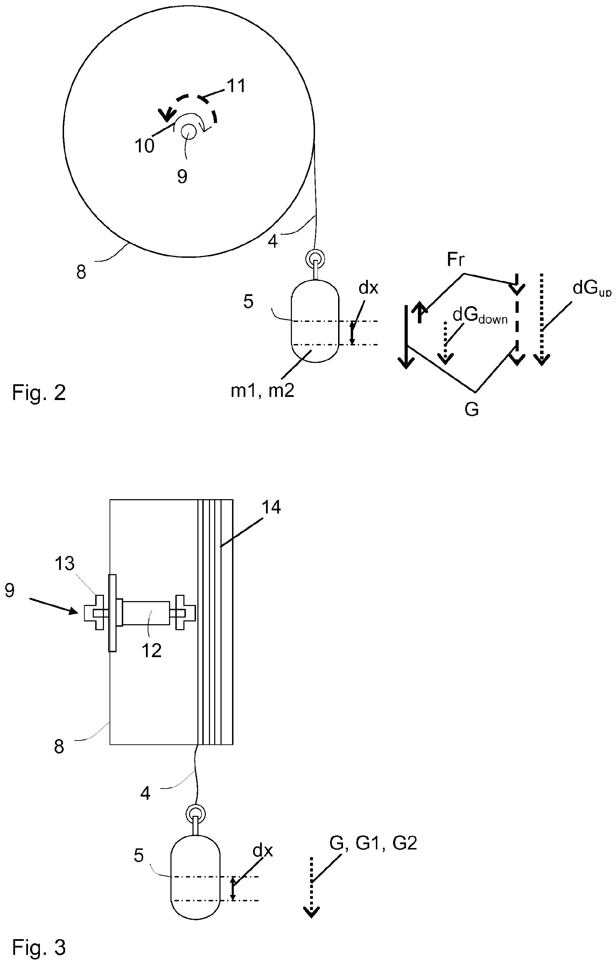

In Fig. 2 und Fig. 3 sind verschiedene Ansichten eines Teilausschnitts des elektromechanischen Füllstandsmessgeräts 1 gezeigt, welches nach dem Verdrängungsprinzip eines Verdrängerelements 5 bzw. Schwimmers arbeitet. Das Verdrängerelement 5 bzw. der Schwimmer ist an einem Ende eines Messseils bzw. Messdrahtes 4 befestigt und das andere Ende des Messdrahtes 4 ist einlagig auf einer äußeren Seiltrommel bzw. der Messtrommel 8 aufgewickelt.

Ein kleines Verdrängerelement 5 wird mit Hilfe eines kleinen Servomotors präzise an der Grenzstelle des Gleichgewichtsvolumens in der Flüssigkeit bzw. in dem flüssigen Füllgut 6 positioniert. Das Verdrängerelement 5 hängt an einem Messdraht bzw. -seil 4, der auf eine mit feinen Rillen 14 versehene Messtrommel 8 bzw. äußere Seiltrommel im Gehäuseinnern des Füllstandsmessgeräts 1 mit gleichbleibendem Wicklungsdurchmesser einlagig aufgewickelt ist. Die Messtrommel 8 besteht hierbei beispielsweise aus einer äußere Seiltrommel welche über Koppelmagnete mit der inneren Seiltrommel gekoppelt und die mittels dem Trommelgehäuse vollständig und hermetisch dicht voneinander räumlich getrennt sind. Die äußeren Magneten sind mit der äußeren Seiltrommel der Messtrommel 8 verbunden, die inneren Magneten mit der inneren Seiltrommel. Während sich die Magneten drehen, veranlasst die magnetische Anziehungskraft die äußeren Magneten, sich mitzudrehen, so dass die gesamte Trommelbaugruppe der Messtrommel 8 auf der Messwelle 9 rotiert.

Aufgrund des Gewichts des Verdrängerelements 5 am Messdraht 4 wirkt ein Drehmoment auf den äußeren Magneten, wodurch es zu einer Änderung des magnetischen Flusses kommt. Diese zwischen den Komponenten der Messtrommeln 8 wirkenden Magnetfeld-Änderungen werden von einem speziellen elektromagnetischen Messwandler, z. B. einem Hallsensor, auf der inneren Messtrommel erfasst. Das Messwandlersignal der Messwandler wird von der Sensorelektronik in ein Gewichtsmesssignal weiterverarbeitet. Diese Gewichtsmesssignal wird mit dem Positionsdatensignal eines auf der Messwelle befindlichen Enkoders bzw. Kodieres von einem Mikroprozessor in der Hauptelektronik ausgewertet und ein entsprechendes Motorsteuersignal an den Antriebsmotor übermittelt. Der Antriebsmotor wird so von dem Motorsteuersignal angesteuert, dass die durch die Änderungen des magnetischen Flusses erzeugte Spannung an dem Messwandler an die durch den Betätigungsbefehl vorgegebene Spannung angeglichen wird. Wenn sich der Verdrängerelement 5 absenkt und bis zum vordefinierten Gleichgewichtsvolumen des Verdrängerelements 5 in die Flüssigkeit 6 eintaucht. Dadurch ändert sich das Drehmoment in der Magnetkupplung zwischen der äußeren Seiltrommel und der inneren Seiltrommel. Diese Änderung wird beispielsweise von fünf temperaturkompensierten Hall-Detektor-Chips als Messelement gemessen. Das Positionsdatensignal, das die Position des Verdrängerelements 5 anzeigt, wird an die Motorsteuerelektronik in der Hauptelektronik, z.B. einen Mikroprozessor, übertragen. Sobald der Stand der Flüssigkeit 6 steigt und fällt, wird die Position des Verdrängerelements 5 vom Antriebsmotor mittels eines Getriebes nachgeführt. Die Drehung der Messtrommel 8 wird genau ausgewertet, um den Füllstandswert L bis auf +/- 0,7 mm genau zu ermitteln.

Diese Ausgestaltung eines elektromechanischen Füllstandsmessgeräts 1 mit einem an der Messwelle 10 befindlichen Schleifkontakt zur Übertragung des elektrischen Messwandlersignals der elektromagnetischen Messwandlers 21 in der Inneren Seiltrommel 13 an die Hauptelektronik 7, insbesondere die Sensorelektronik 8 mit der Servomotorsteuerelektronik hat den Nachteil, dass dieser mechanische Abgriff des Messwandlersignals über die Schleifkontakte nicht verschleiß frei erfolgt und durch den Reibungswiderstände eine Drehmomentsänderung erzeugt und somit Messungenauigkeiten auftreten können. Deshalb ist es vorteilhaft zur Übertragung des elektrischen Messwandlersignals beispielsweise einen induktiven Rotationstransformator einzusetzen. Desweitern treten tribologische Effekte bzw. Reibungswiderstände an den Drehlagern 13 der Messtrommel 8 auf, wodurch es zur Hysteresen-Bildung bei der Gewichtsbestimmung aufgrund der je nach Drehbewegung 10,11 unterschiedlichen Vorzeichen des Vektors der Reibungskraft Fr kommt. Es ist also wichtig die zuletzt nach der Gewichtsänderung des Verdrängerelements 5 an dem Messdraht 4 vorliegenden Drehrichtung 10, 11 zu kennen. Aus diesem Grund wird die Messtrommel nach der Änderung der Masse m1, m2 des Verdrängerelements 5 am Messdraht 4 eine Drehbewegung 10, 11 in zumindest eine Drehrichtung mit einer definierten Drehgeschwindigkeit O und einer definierten Drehdistanz dx ausgeführt.

Die Messtrommel 8 bzw. die äußere Seiltrommel, auf der der Messdraht 4 einlagig in den Rillen 14 aufgewickelt ist, ist über eine Messwelle 9 bzw. Drehachse in Drehlager 13 gelagert. Diese Drehlager 13 sind beispielsweise Kugellager oder Wälzlager, welche aufgrund des Aufbaus bzw. geringen Kontaktlauffläche einen geringen Reibungswiderstand aufweisen können. Jedoch ist es im Kalibrationsmodus der Gewichtsmessung sehr wichtig, möglichst exakt das angehängte Gewicht beispielsweise eines frei über dem Füllgut 6 hängenden Verdrängerelements 5 zu bestimmen. Da anhand dieser Messwerte der Gewichte der Auswertealgorithmus bzw. die Auswerteelektronik für den Messbetrieb des Füllstandsmessgeräts 1 kalibriert wird. Im Kalibrationsmodus werden beispielsweise zwei unterschiedliche Gewichte bzw. Verdrängerelemente 5 mit unterschiedlichem Masse m1, m2 vom Bediener an den Messdraht 4 beispielsweise im Messraum 3 über dem Füllgut 6 angehängt und die Gewichtskräfte G1, G2 ermittelt. Mittels dieser Messwerte der Gewichtskraft G1, G2 kann beispielsweise auch ein Linearisierung der Messkurve der Gewichtskräfte G, G1, G2 durchgeführt werden.

Durch dieses Verfahren wird die durch die mechanische Reibung, beispielsweise der Drehlager 13, verursachte Hysterese während der Gewichtsmessung im Kalibrierungsmodus aufgehoben und/oder herausgerechnet.

Die Seiltrommel bzw. Messtrommel 8 des elektromechanischen Füllstandsmessgeräts wird durch ein Drehlager 13 und eine Lagerwelle 12 gehalten. Wie schon beschrieben, hat jedes Drehlager 13 einen Reibungswiderstand, der einen Hysterese-Fehler bei der Gewichtsmessung verursacht. Wird eine Drehbewegung 10 der Messtrommel 8 ausgeführt, bei der sich das Verdrängerelement 5 nach unten zum Füllgut 6 hin um einen vorbestimmte Drehdistanz dx absenkt, ist die Lagerreibungskraft Fr entgegengesetzt zu der Gewichtskraft G, G1, G2 des Verdrängerelements 5, die in Bewegungsrichtung erzeugt wird. Die Gewichtskraft, bzw. die Gewichstkraftdifferenz dG, dG1, dG2, dG$_{up}$, dG$_{down}$ lässt sich somit bei den Messdraht 4 abwickelnde Drehbewegung 10 zur Absenkung des Verdrängerelements 5 wie folgt bestimmen:

$$dG_{down} = G - Fr$$

Wird die Messtrommel 8 in entgegengesetzte, den Messdraht 4 aufwickelnde Drehrichtung 11 gedreht, wird das Verdrängerelement 5 angehoben und die Reibungskraft Fr des Drehlagers 13 addiert sich zur Gewichtskraft G, G1, G2 hinzu.

$$dG_{up} = G + Fr$$

Während des normalen Messbetriebs wird dieser Hysterese-Fehler von dem Messalgorithmus kompensiert, in dem die Reibungskraft heraus gerechnet bzw. eliminiert wird.

Doch während des Kalibrierungsmodus der Gewichtsmessung des elektromechanischen Füllstandmessgeräts 1 ist dieser Hysterese-Fehler stets vorhanden. Aus diesem Grund erfolgt die Kalibrierung der Gewichtsmessung nach folgenden Schritten. Im Kalibrierungsmodus der Gewichstmessung werden vor Ort zumindest zwei unterschiedliche Gewichte bzw. Verdrängerelemente 5, mit unterschiedlichen, definierten Gewichten bzw. Massen m1, m2 an dem Messdraht 4 der Messtrommel 8 angehängt. Beispielsweise wird das Verdrängerelement 5 zur Kalibrierungsmessung ausgehängt, was der Masse m1 mit 0 Gramm entspricht, und wieder eingehängt, wodurch die Masse m2 die Masse des Verdrängerelementes 5, z. B. 250 Gramm, ist. Abhängig von der zuletzt durchgeführten Drehbewegung 10, 11 wird die Reibungskraft Fr des Hysteresen-Fehlers aufgrund der Reibung des Drehlagers 13 zur Gewichtskraft G, G1, G2 hinzugezählt oder abgezogen. Die Reibungskraft Fr wird somit aus der Gewichtsmessung Gewichtskraft G, G1, G2 eliminiert bzw. herausgerechnet.

Zur Kalibration der Gewichtsmessung eines elektromechanisches Füllstandsmessgeräts wird ein frei hängende Verdrängerelemente 5 mit einer definierten Masse m, m1, m2 zur Ermittlung deren Gewichtskraft G, G1, G2 an dem Messdraht 4 angehängt. Nach jeder Änderung der frei hängende Verdrängerelemente 5 mit einer vordefinierten Masse m, m1, m2 wird eine vordefinierte Drehbewegung 10, 11 der Messtrommel (8) durchgeführt, und deren ermittelten Gewichtskräfte G, G1, G2 als Kalibrationswerte zur Gewichtsmessung verwendet.

Die Messtrommel 12 wird mittels der vordefinierten Drehbewegung 10,11 in zumindest eine oder in beide Drehrichtungen mit einer definierten Winkelgeschwindigkeit O, mit einer definierten Winkelbeschleunigung a und/oder mit einer definierten Drehdistanz dx gedreht, so dass sich da das Verdrängerelement 5 immer um dieselbe Drehdistanz dx mit derselben Drehgeschwindigkeit O anhebt und/oder absenkt. Aus der so ermittelten Reibungskraft Fr, insbesondere zur Kompensation der Reibungskraft Fr des Drehlagers 13 der Messwelle 12 der Messtrommel 8, berechnet ein Algorithmus zumindest im Kalibrationsmodus der Gewichtsmessung des elektromechanischen Füllstandsmessgeräts 1 die Reibungskraft Fr aus der aktuellen Ermittlung der Gewichtskraft G, G1, G2 heraus, indem die Gewichtskraftsdifferenz dG, dG1, dG2, dG$_{up}$, dG$_{down}$ in beide Drehrichtungen der vordefinierte Drehbewegung 10, 11 der Messtrommel 8 ermittelt wird und aus dieser Gewichtskraftsdifferenz dG, dG1, dG2, dG$_{up}$, dG$_{down}$ die Reibungskraft Fr ermittelt bzw. eliminiert wird.

## Bezugszeichenliste

| | |
|---|---|
| 1 | Füllstandsmessgerät |
| 2 | Behälter |
| 3 | Meßraum |
| 4 | Messdraht, Draht, Messseil |
| 5 | Verdrängerelement |
| 6 | Füllgut, Medium |
| 7 | Feldbus |
| 8 | Messtrommel |
| 9 | Drehachse |
| 10 | Erste Drehrichtung |
| 11 | Zweite Drehrichtung |
| 12 | Lagerschaft, Lagerwelle, Messwelle |
| 13 | Drehlager |
| 14 | Rillen |
| G | Gewichstkraft |
| G1 | Erste Gewichstkraft |
| G2 | Zweite Gewichstkraft |
| dG | Gewichstkraftdifferenz |
| dG$_{up}$ | Gewichstkraftdifferenz, falls das Verdrängerelement hochgezogen wird |

dG_down    Gewichtskraftdifferenz, falls das Verdrängerelement abgelassen wird.

dG1    Erste Gewichstkraftdifferenz

dG2    Zweite Gewichstkraftdifferenz

m    Masse

m1    Erste Masse

m2    Zweite Masse

O    Winkelgeschwindigkeit

a    Winkelbeschleunigung

dx    Drehdistanz

Fr    Reibungskraft

**Patentansprüche**

1. Verfahren zur Kalibration der Gewichtsmessung eines elektromechanischen Füllstandmessgerätes, das folgendes enthält:

    - zumindest ein Verdrängerelement, das mittels eines Messdrahtes abwickelbar zumindest mit einer Messtrommel verbunden ist,
    - zumindest eine Messwelle, mit der die Messtrommel mechanisch fest verbunden ist, und die in zumindest einem Drehlager gelagert ist,
    - zumindest eine in einem Kalibrationsmodus kalibrierte Gewichtsmessung, die die aktuelle Gewichtskraft des Verdrängerelements und des Messdrahtes ermittelt, und
    - einen Servomotor, der mit der Messwelle gekoppelt ist und der die Messwelle entsprechend der von der Gewichtsmessung ermittelten Gewichtskraft nachführt,

    wobei das Füllstandsmessgerät derart ausgebildet ist, dass es eine von einer Änderung des zu messenden Flüssigkeitsniveaus erzeugte Relativbewegung der Messtrommel ermittelt, **dadurch gekennzeichnet, dass** in dem Kalibrationsmodus Kalibrationswerte ermittelt werden, indem

    - zumindest zwei Gewichte bzw. Verdrängerelemente (5) mit unterschiedlichen, definierten Gewichten bzw. Massen (m, m1, m2) zur Ermittlung deren Gewichtskraft (G, G1, G2) nacheinander jeweils frei hängend an dem Messdraht (4) angehängt werden,
    - eine vordefinierte Drehbewegung (10, 11) der Messtrommel (8) durchgeführt wird, und
    - als Kalibrationswerte zur Gewichtsmessung die jeweiligen Gewichtskräfte (G, G1, G2) ermittelt werden.

2. Verfahren nach Anspruch 1, **dadurch gekennzeichnet,** **dass** die im Kalibrationsmodus nacheinander an den Messdraht (4) angehängten Gewichte bzw. Verdrängerelemente (5) ein Gewicht der Masse 0 Gramm umfassen, das dadurch erzielt wird, dass der frei hängende Messdraht (4) ohne ein angehängtes Verdrängerelement (5) verwendet wird.

3. Verfahren nach zumindest einem der zuvor aufgeführten Ansprüche, **dadurch gekennzeichnet,** **dass** die vordefinierte Drehbewegung (10, 11) der Messtrommel (8) beide Drehrichtungen umfasst.

4. Verfahren nach zumindest einem der Ansprüche 1 oder 3, **dadurch gekennzeichnet,** **dass** die vordefinierte Drehbewegung (10, 11) der Messtrommel (8) mit einer definierten Winkelgeschwindigkeit (O), einer definierten Winkelbeschleunigung (a) und/oder einer definierten Drehdistanz (dx) erfolgt.

5. Verfahren nach zumindest einem der zuvor aufgeführten Ansprüche, **dadurch gekennzeichnet,** **dass** das Füllstandsmessgerät einen Algorithmus umfasst, der zumindest im Kalibrationsmodus der Gewichtsmessung des elektromechanischen Füllstandsmessgeräts (1) die Reibungskraft (Fr) des Drehlagers (13) der Messwelle (12) der Messtrommel (8) kompensiert und aus der aktuellen Ermittlung der Gewichtskraft (G, G1, G2) herausrechnet.

6. Verfahren zur Kalibration der Gewichtsmessung eines elektromechanischen Füllstandsmessgeräts nach zumindest einem der zuvor aufgeführten Ansprüche, **dadurch gekennzeichnet,** **dass** die Messtrommel (12) mittels der vordefinierten Drehbewegung (10,11) in zumindest eine oder in beide Drehrichtungen mit einer definierten Winkelgeschwindigkeit (O), einer definierten Winkelbeschleunigung (a) und/oder einer definierten Drehdistanz (dx) gedreht wird.

7. Verfahren zur Kalibration der Gewichtsmessung eines elektromechanischen Füllstandsmessgerätes nach zumindest einem der zuvor aufgeführten Ansprüche, **dadurch gekennzeichnet,** **dass** ein Algorithmus zumindest im Kalibrationsmodus der Gewichtsmessung des elektromechanischen Füllstandsmessgeräts zur Kompensation der Reibungskraft (Fr) des Drehlagers (13) der Messwelle (12) der Messtrommel (8) verwendet wird, der die Reibungskraft (Fr) aus der aktuellen Ermittlung der Gewichtskraft (G, G1, G2) herausrechnet.

8. Verfahren zur Kalibration der Gewichtsmessung eines elektromechanischen Füllstandsmessgerätes nach Anspruch 7,
**dadurch gekennzeichnet,**
**dass** die Reibungskraft (Fr) des Drehlagers (13) der Messwelle (12) der Messtrommel (8) aus der aktuellen Ermittlung der Gewichtskraft (G, G1, G2) von dem Algorithmus zumindest im Kalibrationsmodus der Gewichtsmessung des elektromechanischen Füllstandsmessgeräts (1) heraus gerechnet wird, indem die Gewichtskraftsdifferenz (dG, dG1, dG2) in beide Drehrichtungen der vordefinierte Drehbewegung (10, 11) der Messtrommel (8) ermittelt wird und aus dieser Gewichtskraftsdifferenz (dG, dG1, dG2) die Reibungskraft (Fr) ermittelt wird.

**Claims**

1. Procedure for the calibration of the weight measurement of an electromechanical level transmitter, comprising the following:

   - at least a displacement element, which is connected at least to a measuring drum by means of a measuring wire that can be wound,
   - at least a measuring shaft to which the measuring drum is mechanically connected in a permanent manner and which is accommodated in at least a pivot bearing,
   - at least a weight measurement calibrated in a calibration mode, which determines the current weight force of the displacement element and the measuring wire, and
   - a servomotor, which is coupled to the measuring shaft and which tracks the measuring shaft in line with the weight force determined by the weight measurement,

   wherein the level transmitter is designed in such a way that it determines a relative movement of the measuring drum generated by a change in the level of the liquid to be measured,
   **characterized in that**
   calibration values are determined in the calibration mode **in that**

   - at least two weights or displacement elements (5), having different, defined weights or masses (m, ml, m2), are freely suspended in succession from the measuring wire (4) to determine their weight force (G, G1, G2),
   - a predefined rotational movement (10, 11) of the measuring drum (8) is performed, and
   - the respective weight forces (G, G1, G2) are determined as calibration values for the weight measurement.

2. Procedure as claimed in Claim 1,
   **characterized in that**
   the weights or displacement elements (5) attached in succession to the measuring wire (4) in the calibration mode comprise a weight of mass 0 gram which is obtained by using the freely suspended measuring wire (4) without an attached displacement element (5).

3. Procedure as claimed in at least one of the previous claims,
   **characterized in that**
   the predefined rotational movement (10, 11) of the measuring drum (8) comprises both rotation directions.

4. Procedure as claimed in at least one of the Claims 1 or 3,
   **characterized in that**
   the predefined rotational movement (10, 11) of the measuring drum (8) is performed at a defined angular velocity (O), a defined angular acceleration (a) and/or a defined rotational distance (dx).

5. Procedure as claimed in at least one of the previous claims,
   **characterized in that**
   the level transmitter comprises an algorithm which, at least in the calibration mode of the weight measurement of the electromechanical level transmitter (1), compensates for the frictional force (Fr) of the pivot bearing (13) of the measuring shaft (12) of the measuring drum (8) and separates it out of the current determination of the weight force (G, G1, G2).

6. Procedure for the calibration of the weight measurement of an electromechanical level transmitter as claimed in at least one of the previous claims,
   **characterized in that**
   the measuring drum (12) is rotated by means of the predefined rotational movement (10, 11) in at least one or in both directions of rotation with a defined angular velocity (O), a defined angular acceleration (a) and/or a defined rotational distance (dx).

7. Procedure for the calibration of the weight measurement of an electromechanical level transmitter as claimed in at least one of the previous claims,
   **characterized in that**
   an algorithm is used at least in the calibration mode of the weight measurement of the electromechanical level transmitter for the compensation of the frictional force (Fr) of the pivot bearing (13) of the measuring shaft (12) of the measuring drum (8), wherein said algorithm separates the frictional force (Fr) out of the current determination of the weight force (G, G1, G2).

8. Procedure for the calibration of the weight measurement of an electromechanical level transmitter as claimed in Claim 7,
**characterized in that**
the frictional force (Fr) of the pivot bearing (13) of the measuring shaft (12) of the measuring drum (8) is separated out of the current determination of the weight force (G, G1, G2) by the algorithm at least in the calibration mode of the weight measurement of the electromechanical level transmitter (1) by determining the weight force difference (dG, dG1, dG2) in both directions of rotation of the predefined rotational movement (10, 11) of the measuring drum (8) and by determining the frictional force (Fr) from this weight force difference (dG, dG1, dG2).

**Revendications**

1. Procédé destiné à l'étalonnage de la mesure de poids d'un transmetteur de niveau électromécanique, lequel transmetteur contient les éléments suivants :

- au moins un élément déplaceur, qui est relié de manière déroulable au moins à un tambour de mesure au moyen d'un fil de mesure,
- au moins un arbre de mesure, avec lequel le tambour de mesure est relié mécaniquement de manière fixe, et lequel arbre est logé dans au moins un palier pivotant,
- au moins une mesure de poids étalonnée dans un mode d'étalonnage, laquelle mesure détermine le poids actuel de l'élément déplaceur et du fil de mesure, et
- un servomoteur, lequel est couplé à l'arbre de mesure et entraîne l'arbre de mesure en fonction de la force de gravité déterminée par la mesure de poids, le transmetteur de niveau étant conçu de telle sorte qu'il détermine un mouvement relatif du tambour de mesure généré par une modification du niveau de liquide à mesurer,

**caractérisé**
**en ce que**, dans le mode d'étalonnage, des valeurs d'étalonnage sont déterminées **en ce que**

- au moins deux poids ou éléments déplaceurs (5), lesquels présentent des poids ou des masses définis différents (m, ml, m2), sont accrochés successivement au fil de mesure (4) pour déterminer leur force de gravité (G, G1, G2) respectivement en suspension libre,
- un mouvement de rotation prédéfini (10, 11) du tambour de mesure (8) est effectué, et
- les forces de gravité respectives (G, G1, G2) sont déterminées comme valeurs d'étalonnage pour la mesure du poids.

2. Procédé selon la revendication 1,

**caractérisé**
**en ce que** les poids ou éléments déplaceurs (5) attachés successivement au fil de mesure (4) en mode d'étalonnage comprennent un poids de masse 0 gramme obtenu en utilisant le fil de mesure (4) suspendu librement sans élément déplaceur (5) attaché.

3. Procédé selon au moins l'une des revendications précédentes,
**caractérisé**
**en ce que** le mouvement de rotation prédéfini (10, 11) du tambour de mesure (8) comprend les deux sens de rotation.

4. Procédé selon au moins l'une des revendications 1 ou 3,
**caractérisé**
**en ce que** le mouvement de rotation prédéfini (10, 11) du tambour de mesure (8) s'effectue à une vitesse angulaire définie (O), à une accélération angulaire définie (a) et/ou à une distance de rotation définie (dx).

5. Procédé selon au moins l'une des revendications précédentes,
**caractérisé**
**en ce que** le transmetteur de niveau comprend un algorithme qui, au moins dans le mode d'étalonnage de la mesure de poids du transmetteur de niveau électromécanique (1), compense la force de frottement (Fr) du palier pivotant (13) de l'arbre de mesure (12) du tambour de mesure (8) et l'élimine de la détermination actuelle de la force de gravité (G, G1, G2).

6. Procédé destiné à l'étalonnage de la mesure de poids d'un transmetteur de niveau électromécanique selon au moins l'une des revendications précédentes,
**caractérisé**
**en ce que** le tambour de mesure (12) est tourné au moyen du mouvement de rotation prédéfini (10, 11) dans au moins un sens de rotation ou dans les deux sens de rotation avec une vitesse angulaire définie (O), une accélération angulaire définie (a) et/ou une distance de rotation définie (dx).

7. Procédé destiné à l'étalonnage de la mesure de poids d'un transmetteur de niveau électromécanique selon au moins l'une des revendications précédentes,
**caractérisé**
**en ce qu'**un algorithme est utilisé au moins dans le mode d'étalonnage de la mesure de poids du transmetteur de niveau électromécanique en vue de la compensation de la force de frottement (Fr) du palier pivotant (13) de l'arbre de mesure (12) du tambour de mesure (8), lequel algorithme calcule la force de frottement (Fr) à partir de la détermination actuelle de la force de gravité (G, G1, G2).

8. Procédé destiné à l'étalonnage de la mesure de poids d'un transmetteur de niveau électromécanique selon la revendication 7,
**caractérisé**
**en ce que** la force de frottement (Fr) du palier pivotant (13) de l'arbre de mesure (12) du tambour de mesure (8) est calculée à partir de la détermination actuelle de la force de gravité (G, G1, G2) par l'algorithme au moins dans le mode d'étalonnage de la mesure de poids du transmetteur de niveau électromécanique (1), en déterminant la différence de force de gravité (dG, dG1, dG2) dans les deux sens de rotation du mouvement de rotation prédéfini (10, 11) du tambour de mesure (8) et en déterminant la force de frottement (Fr) à partir de cette différence de force de gravité (dG, dG1, dG2).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2151094
- DE 2401486 B2
- DE 819923 C
- DE 3942239 A1
- US 3838518 A
- DE 19543352 A1
- WO 7031884 A
- WO 7329766 A
- DE 19730196 A1
- DE 102012102658 A1
- DE 2853360 A1
- DE 3721164 A1
- DE 2659416 A1